Europäisches Patentamt

European Patent Office

Office européen des brevets

(11) Publication number: **0 126 428**
A2

# EUROPEAN PATENT APPLICATION

(21) Application number: 84105579.1

(22) Date of filing: 16.05.84

(51) Int. Cl.³: **G 02 B 5/16,** B 29 D 11/00

(30) Priority: 18.05.83 JP 87120/83

(43) Date of publication of application: 28.11.84
Bulletin 84/48

(84) Designated Contracting States: DE FR GB

(71) Applicant: SUMITOMO ELECTRIC INDUSTRIES
LIMITED, No. 15, Kitahama 5-chome Higashi-ku,
Osaka-shi Osaka-fu (JP)

(72) Inventor: Ueba, Yoshinobu c/o Osaka Works, Sumitomo
Electr.Ind. Ltd. 1-3, Shimaya 1-chome, Konohana-ku
Osaka-shi Osaka-fu (JP)
Inventor: Matsumiya, Norifumi c/o Osaka Works,
Sumitomo Electr.Ind. Ltd. 1-3, Shimaya 1-chome,
Konohana-ku Osaka-shi Osaka-fu (JP)

(74) Representative: von Kreisler, Alek, Dipl.-Chem. et al,
Deichmannhaus am Hauptbahnhof, D-5000 Köln 1 (DE)

(54) **Plastic optical fiber.**

(57) A plastic optical fiber comprising a core consisting of an amorphous transparent polymer, a cladding consisting of a transparent polymer having lower refractive index than that of the core polymer and surrounding the core, and a covering consisting of a fiber reinforced plastics surrounding the cladding, which has good heat resistance and mechanical strength.

EP 0 126 428 A2

ACTORUM AG

## PLASTIC OPTICAL FIBER

### FIELD OF THE INVENTION

The present invention relates to a plastic optical fiber. More particularly, it relates to a plastic optical fiber having improved heat resistance, flame resistance and mechanical properties such as tensile strength.

### BACKGROUND OF THE INVENTION

A conventional optical fiber comprises a core consisting of an amorphous transparent polymer such as polymethyl methacrylate and polystyrene and a cladding formed around the core. Since the amorphous transparent polymer is stretched in order to impart flexibility to the optical fiber, it shrinks when the optical fiber is heated to a temperature around the glass transition temperature of the polymer. Therefore, the maximum working temperature of the conventional plastic optical fiber is about 70°C.

Many proposals have been made to improve the heat resistance of the plastic optical fiber including provision of a layer consisting of thermoplastic resin around the plastic optical fiber (cf. Japanese Patent Kokai Publication No. 162704/1981 and Japanese Utility Model Kokai Publication Nos. 170407/1981 and 74403/1982) and provision of a heat barrier around the plastic optical fiber and a thermoplastic resin coating extruded around the barrier (cf. Japanese Patent Kokai Publication No. 36246/1978). These proposals, however, can not prevent the thermal shrinkage and deterioration of the strength of the plastic optical fiber at a temperature of 100°C or higher.

SUMMARY OF THE INVENTION

One object of the invention is to provide a plastic optical fiber having improved heat resistance and flame resistance.

Another object of the invention is to provide a plastic optical fiber having good mechanical properties such as tensile strength.

According to the invention, these and other objects of the invention are accomplished by a plastic optical fiber comprising a core consisting of an amorphous transparent polymer, a cladding consisting of a transparent polymer having lower refractive index than that of the core polymer and surrounding the core, and a covering consisting of a fiber reinforced plastics surrounding the cladding.

BRIEF DESCRIPTION OF THE DRAWINGS

Fig. 1 is a cross-sectional view of the plastic optical fiber of the invention, and

Fig. 2 is a cross-sectional view of the another plastic optical fiber of the invention.

DETAILED DESCRIPTION OF THE INVENTION

Specific examples of the amorphous transparent polymer of the core are polymethyl methacrylate (hereinafter referred to as "PMMA"), polystyrene, polycarbonate, deuterated PMMA, deuterated polystyrene, deuterated polycarbonate, copolymer of alkyl methacrylate (eg. methyl methacrylate, ethyl methacrylate, butyl methacrylate, isobutyl methacrylate, isobornyl methacrylate, etc.) and at least one other monomer (eg. styrene, etc.).

Specific examples of the transparent polymer of the cladding are fluoropolymers such as polyvinylidene fluoride, vinylidene fluoride/tetrafluoroethylene copolymer, vinylidene fluoride/tetrafluoroethylene/hexafluoropropylene terpolymer, fluorine-containing methacrylate polymer and fluorine-containing methacrylate/methyl methacrylate copolymer, silicone resin, ethylene/vinyl acetate copolymer, etc.

The covering of the fiber reinforced plastics (hereinafter referred to as "FRP") comprises a matrix resin such as thermoplastic resin, thermosetting resin or ultraviolet curing resin which is reinforced with a fibrous filler. Specific examples of the thermoplastic rein are polystyrene, ABS resin, polyamide, polyacetal, polycarbonate, polyphenylene oxide, etc. Specific examples of the thermosetting resin are phenol resin, melamine resin, polyester resin, epoxy resin, etc. Specific examples of the ultraviolet curing resin are epoxy acrylate, urethane acrylate, silicone acrylate, epoxy resin reactive to Lewis acid, etc. Among them, epoxy resin curable at a room temperature (eg. epoxy resin containing, as a curing agent, an amine-type curing agent such as diethylenetriamine, triethylenetetramine, N-aminoethylpiperazine, benzyl-dimethylamine, dicyandiamide, xylylenediamine, or benzo-phenotetracarboxylic anhydride) and the ultraviolet curing resins are preferred since they do not require such production conditions that adversely affect the core and the cladding and do not increase attenuation of light transmission through the optical fiber. Specific examples of the fibrous filler contained in the matrix resin are inorganic fibers such as glass fiber, carbon fiber, graphite fiber; organic fibers such as polyamide fiber; metal fiber, etc. The fibrous filler may be either long fiber or short fiber. The matrix of the FRP may contain other additives such as a flame retardant.

The FRP covering may be formed directly on the cladding, or any middle layer comprising thermoplastic resin, ultraviolet curing resin, jelly or a rubbery filler may be formed between the cladding and the covering.

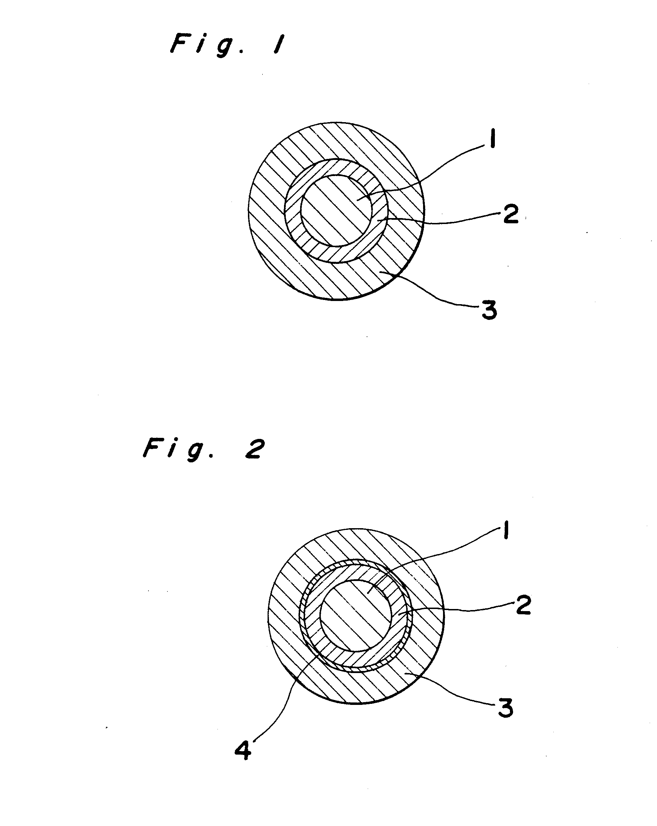

Now, referring to the drawings, Fig. 1 shows a cross-sectional view of a plastic optical fiber of the invention which comprises a core 1, a cladding 2 and a FRP covering 3. Fig. 2 shows a cross-sectional view of another plastic optical fiber according to the invention which further comprises a middle layer 4.

The diameter of the core and the thickness of the cladding are the same as those of the conventional plastic optical fiber. The thickness of the FRP covering depends on the end use of the optical fiber, and is generally at least 0.05 mm, preferably at least 0.1 mm, more preferably at least 0.4 mm. A too thick covering will, however, deteriorate the properties of the optical fiber such as flexibility.

The core and the cladding are produced in the same manner as in the production of the conventional plastic optical fiber.

The FRP covering may be formed on the surface of the cladding by extruding FRP containing the thermoplastic polymer as the matrix resin around the cladding, or by forming a middle layer on the cladding at a relatively low temperature, for example from 30 to 50°C, coating the FRP containing the thermosetting resin or the ultraviolet curing resin as the matrix resin and then applying heat or irradiating ultraviolet light to the matrix resin to cure it.

The plastic optical fiber of the invention has excellent heat resistance and hardly shrinks at a temperature higher than 100°C. It has good resistance against tension, bend, torsion, etc. Further, it has good chemical and water resistance since it has the FRP covering.

Since the plastic optical fiber has such the good properties as described above, it can be used in a field where heat resistance and/or flame resistance are required, for example, data link in moving bodies, automobiles, air crafts, rockets, or a field where the mechanical strength is required, for example, robots, sensors and CPU.

-6-

What is claimed is:

1. A plastic optical fiber comprising a core consisting of an amorphous transparent polymer, a cladding consisting of a transparent polymer having lower refractive index than that of the core polymer and surrounding the core, and a covering consisting of a fiber reinforced plastics surrounding the cladding.

2. A plastic optical fiber according to claim 1, wherein the amorphous transparent polymer is one selected from the group consisting of polymethyl methacrylate, polystyrene, polycarbonate, deuterated polymethyl methacrylate, deuterated polystyrene, deuterated polycarbonate, copolymer of alkyl methacrylate and at least one other monomer.

3. A plastic optical fiber according to claim 1, wherein, the transparent polymer having the lower refractive index than that of the core is a polymer selected from the group consisting of polyvinylidene fluoride, vinylidene fluoride/tetrafluoroethylene copolymer, vinylidene fluoride /tetrafluoroethylene/hexafluoropropylene terpolymer, fluorine-containing methacrylate polymer, fluorine-containing methacrylate/methyl methacrylate copolymer, silicone resin and ethylene/vinyl acetate copolymer.

0126428

4. A plastic optical fiber according to claim 1, wherein the matrix of the fiber reinforced plastics comprises a polymer selected from the group consisting of thermoplastic resin, thermosetting resin and ultraviolet curing resin.

5. A plastic optical fiber according to claim 4, wherein the thermoplastic resin is one selected from the group consisting of polystyrene, ABS resin, polyamide, polyacetal, polycarbonate and polyphenylene oxide.

6. A plastic optical fiber according to claim 4, wherein the thermosetting resin is one selected from the group consisting of phenol resin, melamine resin, polyester resin and epoxy resin.

7. A plastic optical fiber according to claim 4, wherein the ultraviolet curing resin is one selected from the group consisting of epoxy acrylate, urethane acrylate, silicone acrylate and epoxy resin reactive to Lewis acid.

8. A plastic optical fiber according to claim 5, wherein the thermosetting resin is epoxy resin curable at a room temperature which contains, as a curing agent, an amine-type curing agent or benzophenotetracarboxylic anhydride.

9. A plastic optical fiber according to claim 8, wherein the amine-type curing agent is one selected from the group consisting of diethylenetriamine, triethylenetetraamine, N-aminoethylpiperazine, benzyldimethylamine, dicyane-diamide and xylilenediamine.

Fig. 1

Fig. 2